# EUROPÄISCHE PATENTANMELDUNG

(11) **EP 2 432 247 A2**
(43) Veröffentlichungstag der Anmeldung: **21.03.2012**
(21) Anmeldenummer: 11006662.8
(22) Anmeldetag: 12.08.2011
(51) Int. Cl.: H04Q 9/00

(54) **Photovoltaikanlage und Verfahren zum Überwachen einer Photovoltaikanlage**

(30) Priorität: 18.08.2010 DE 102010034670
(71) Anmelder: Diehl AKO Stiftung & Co. KG, 88239 Wangen (DE)
(72) Erfinder: Glaner, Robert, 88427 Bad Schussenried (DE); Kopplin, Robert, 88239 Wangen (DE)
(74) Vertreter: Diehl Patentabteilung

(57) **Zusammenfassung**

Zum Überwachen einer Photovoltaikanlage mit einer Anzahl zu überwachender elektrischer oder elektronischer Komponenten (10, 11, 12), die an bestimmten Positionen angeordnet sind, wird ein Verfahren mit den Schritten vorgeschlagen: Erfassen und Speichern eines Ortsplanes (28) und von Positionen der zu überwachenden Komponenten (10, 11, 12) in dem Ortsplan durch eine Überwachungsvorrichtung (20); Erfassen von Betriebsdaten der zu überwachenden Komponenten (10, 11, 12) durch diesen zugeordnete Messvorrichtungen (16, 17, 18, 19); Übertragen der erfassten Betriebsdaten zusammen mit einem Gerätecode der jeweiligen zu überwachenden Komponente (10, 11, 12) an die Überwachungsvorrichtung (20); Zuordnen der empfangenen Gerätecodes zu den Positionen der diesen entsprechenden zu überwachenden Komponenten (10, 11, 12) in dem erfassten Ortsplan (28) durch die Überwachungsvorrichtung (20); und Ausgeben von Betriebsdaten und/oder diesen entsprechenden Signalen in dem Ortsplan (28) an den Positionen der jeweiligen zu überwachenden Komponenten (10, 11, 12) durch die Überwachungsvorrichtung.

## Beschreibung

Die vorliegende Erfindung betrifft eine Photovoltaikanlage mit einer Anzahl zu überwachender elektrischer oder elektronischer Komponenten und ein Verfahren zum Überwachen einer solchen Photovoltaikanlage.

Photovoltaikanlagen dienen der Einspeisung von elektrischem Strom in ein elektrisches Netz. Zu diesem Zweck können sie einen oder mehrere Photovoltaikgeneratoren aufweisen, welche jeweils aus mehreren Solarmodulen mit jeweils wenigstens einer Solarzelle bestehen. Die Solarmodule sind dabei zu so genannten Strings in Reihe zusammengeschaltet. Die photovoltaisch erzeugte Gleichspannung des/der Strings wird einem oder mehreren Wechselrichtern zugeführt, der/die diese in eine geregelte, standardisierte, ein- oder mehrphasige Wechselspannung umwandelt/umwandeln, um sie in ein Stromnetz einzuspeisen oder einem Verbraucher zur Verfügung zu stellen.

In solchen Photovoltaikanlagen ist es üblich, die installierten Solarmodule und Wechselrichter automatisch zu überwachen, um eventuell auftretende Störungen schnellstmöglich erkennen und beheben zu können. Damit ein Überwachungssystem neben dem Auftreten einer Störung auch den Ort der konkreten Komponente, an welcher die Störung aufgetreten ist, anzeigen bzw. benennen kann, muss das Überwachungssystem vor Inbetriebnahme entsprechend konfiguriert werden.

Zu diesem Zweck ist es beispielsweise bekannt, jeder zu überwachenden Komponente einen Namen oder Nummer in einer vordefinierten Art und Weise, welche auf den Installationsort schließen lässt, zuzuweisen. Dieser Positionscode muss dann manuell mit dem jeweiligen Gerätecode (z.B. Seriennummer) in Verbindung gebracht werden. Zur Überwachung der Komponenten werden von diesen mittels geeigneter Messvorrichtungen die aktuellen Betriebsdaten und die jeweiligen Gerätecodes an eine Überwachungsvorrichtung übertragen. Diese Überwachungsvorrichtung kann dann die Überwachungsergebnisse in Listenform anzeigen, welche insbesondere die Betriebsdaten und den Positionscode enthält. Um die jeweiligen Komponenten dann in der Photovoltaikanlage auffinden zu können, wird ein zusätzlicher Ortsplan benötigt, aus dem sich anhand der Positionscodes die aktuellen Positionen der zu überwachenden Komponenten innerhalb der Photovoltaikanlage ermitteln lassen.

Diese manuelle Konfiguration des Überwachungssystems und diese manuelle Lokalisierung der überwachten Komponenten innerhalb der Photovoltaikanlage sind insbesondere bei Photovoltaikanlagen mit einer großen Anzahl zu überwachender Komponenten zeitaufwändig und fehleranfällig. Es besteht deshalb Bedarf an einer möglichst einfach zu konfigurierenden Photovoltaikanlage mit einfach zu lokalisierenden Komponenten.

In diesem Zusammenhang schlägt die DE 10 2006 034 223 B4 der Anmelderin eine Photovoltaikanlage vor, bei welcher jedes Solarmodul eines Strings mit einer Messvorrichtung zum Erfassen von Betriebsdaten versehen ist, wobei die Messvorrichtungen mit einer zentralen Steuerung im Wechselrichter verbunden sind und dieser neben den Betriebsdaten auch Informationen darüber senden, welches Solarmodul innerhalb des Strings als fehlerhaft analysiert worden ist. Der Wartungsaufwand kann so im Fall eines fehlerhaften Solarmoduls reduziert werden, da das Analyseergebnis dem Betreiber der Photovoltaikanlage auch konkret das fehlerhafte Solarmodul anzeigt. Bei großen Photovoltaikanlagen mit zahlreichen Photovoltaikgeneratoren muss der Betreiber beim Überwachen aber dennoch manuell den fehlerhaften String in der Anlage lokalisieren.

Es ist die Aufgabe der vorliegenden Erfindung, eine verbesserte Photovoltaikanlage zu schaffen, welche eine einfache Lokalisierung von zu überwachenden Komponenten innerhalb der Photovoltaikanlage ermöglicht.

Gemäß einem ersten Aspekt der Erfindung wird diese Aufgabe gelöst durch eine Photovoltaikanlage mit den Merkmalen des Anspruches 1. Vorteilhafte Ausgestaltungen und Weiterbildungen der Photovoltaikanlage sind Gegenstand der abhängigen Ansprüche 2 bis 7.

Die Photovoltaikanlage umfasst eine Anzahl zu überwachender elektrischer oder elektronischer Komponenten, die an bestimmten Positionen angeordnet sind; mehrere Messvorrichtungen, die jeweils einer zu überwachenden Komponente zugeordnet sind, zum Erfassen von Betriebsdaten der jeweiligen zu überwachenden Komponente, wobei die Messvorrichtungen jeweils zum Übertragen der erfassten Betriebsdaten zusammen mit einem Gerätecode der jeweiligen zu überwachenden Komponente ausgebildet sind; und eine Überwachungsvorrichtung zum Überwachen der zu überwachenden Komponenten der Photovoltaikanlage. Diese Überwachungsvorrichtung weist einen Empfänger zum Empfangen der von den Messvorrichtungen übertragenen Betriebsdaten und Gerätecodes, eine Auswerteeinrichtung zum Auswerten der empfangenen Betriebsdaten und eine Ausgabevorrichtung zum Ausgeben von Gerätecodes oder diesen entsprechenden Angaben zusammen mit zugehörigen Betriebsdaten auf.

Diese Photovoltaikanlage ist erfindungsgemäß dadurch gekennzeichnet, dass die Überwachungsvorrichtung ferner eine Eingabevorrichtung zum Eingeben eines Ortsplanes und der Positionen der zu überwachenden Komponenten in dem Ortsplan aufweist; die Auswerteeinrichtung der Überwachungsvorrichtung ferner ausgebildet ist, um die empfangenen Gerätecodes den Positionen der diesen entsprechenden zu überwachenden Komponenten in dem eingegebenen Ortsplan zuzuordnen; und die Ausgabevorrichtung der Überwachungsvorrichtung ferner ausgebildet ist, um die ausgewerteten Betriebsdaten und/oder diesen entsprechende Signale in dem Ortsplan an den Positionen der jeweiligen zu überwachenden Komponenten darzustellen.

Gemäß der Erfindung werden der Überwachungsvorrichtung ein Ortsplan und die Positionen der zu überwachenden Komponenten in diesem Ortsplan zur Verfügung gestellt. Außerdem ist die Überwachungsvorrichtung in der Lage, die von den Messvorrichtungen der zu überwachenden Komponenten empfangenen Gerätecodes den erfassten Positionen in dem Ortsplan zuzuordnen. Auf diese Weise kann die Überwachungsvorrichtung dann dem Betreiber bzw. dem Überwachungspersonal die erfassten Betriebsdaten (bzw. diesen entsprechende Signale) direkt in dem Ortsplan an den Positionen der jeweiligen Komponenten ausgeben. So kann der Benutzer die überwachten Komponenten der Photovoltaikanlage direkt, d.h. auf einfache Weise und ohne zusätzliche Ortspläne oder Gerätepositionslisten, lokalisieren. Der Zeitaufwand und die Fehlerwahrscheinlichkeit dieser Lokalisierung werden stark verringert, wodurch der Überwachungs- und Wartungsaufwand deutlich reduziert werden können.

Die besonderen Vorteile der Photovoltaikanlage der Erfindung liegen in der zumindest halbautomatischen Konfiguration des Überwachungssystems, d.h. der halbautomatischen Erstellung der Anlagendokumentation und der automatischen Übernahme in die Überwachungsvorrichtung. Diese Konfiguration des Überwachungssystems kann auf einfache Weise ohne spezielle, zusätzliche Werkzeuge und ohne Rechnerunterstützung vor Ort durchgeführt werden.

Bei den "zu überwachenden elektrischen oder elektronischen Komponenten" der Photovoltaikanlage handelt es sich insbesondere um Solarmodule, Wechselrichter und Alarmeinrichtungen, ohne dass die Erfindung auf diese Komponenten beschränkt sein soll.

Die durch die Messvorrichtungen zu erfassenden "Betriebsdaten" der zu überwachenden Komponenten umfassen zum Beispiel elektrische Daten wie Leistung, Strom, Spannung, Ein/Aus-Zustand und dergleichen sowie weitere Daten wie Gerätetemperatur, Umgebungstemperatur und dergleichen. Die Betriebsdaten sollen insbesondere Aufschluss über den aktuellen Betriebszustand und die Funktionsfähigkeit der jeweiligen Komponente geben.

Die "Messvorrichtungen" zum Erfassen dieser Betriebsdaten können wahlweise in die zu überwachenden Komponenten integriert sein oder als separate Geräte ausgebildet sein.

Unter einem "Gerätecode" soll eine eindeutige Gerätekennzeichnung der jeweiligen zu überwachenden Komponente verstanden werden. Der Gerätecode kann beispielsweise einer Seriennummer der Komponente entsprechen, die ggf. um weitere Angaben ergänzt ist.

Die "Übertragung" der Betriebsdaten und der Gerätecodes kann wahlweise drahtgebunden oder drahtlos (z.B. per Funk) erfolgen.

Als "Ortsplan" kann jede beliebige Form eines Planes verwendet werden. So kann es sich bei dem Ortsplan zum Beispiel um einen technischen Grundrissplan der Photovoltaikanlage oder um eine einfache Handskizze handeln.

Die Ausgabe des Ortsplanes mit den Betriebsdaten an den Positionen der jeweiligen zu überwachenden Komponenten erfolgt beispielsweise auf einem Monitor oder einem Drucker als "Ausgabevorrichtung", vorzugsweise in Form einer HTML-Seite auf einem Webserver als "Ausgabevorrichtung".

In einer Ausgestaltung der Erfindung weist der Ortsplan wenigstens zwei Ebenen auf. Dabei sind in einer übergeordneten Ebene die Positionen von Gruppen von zu überwachenden Komponenten der Photovoltaikanlage darstellbar, während in einer untergeordneten Ebene die Positionen der zu überwachenden Komponenten innerhalb einer Gruppe von zu überwachenden Komponenten darstellbar sind. Beispielsweise können in der übergeordneten Ebene die Positionen der Photovoltaikgeneratoren angezeigt werden und in der untergeordneten Ebene die an dieser Position vorhandenen Solarmodule und Wechselrichter der Photovoltaikgeneratoren dargestellt werden. Insbesondere bei größeren Photovoltaikanlagen mit einer Vielzahl von zu überwachenden Komponenten kann eine solche gruppierte bzw. kaskadierte Darstellung der Komponenten in dem Ortsplan von Vorteil sein.

In einer vorteilhaften Alternative der Erfindung weist der Ortsplan wenigstens zwei Ebenen auf. Dabei sind in einer übergeordneten Ebene die Positionen von zu überwachenden Komponenten der Photovoltaikanlage darstellbar. Beispielsweise können in der übergeordneten Ebene die Positionen der vorhandenen Solarmodule und Wechselrichter der Photovoltaikgeneratoren dargestellt werden. Insbesondere bei größeren Photovoltaikanlagen mit einer Vielzahl von zu überwachenden Komponenten kann eine solche gruppierte bzw. kaskadierte Darstellung der Komponenten in dem Ortsplan von Vorteil sein. So ist eine Überwachung von einzelnen Komponenten, also Einzelgeräten, in Kombination mit Gruppen von Komponenten möglich.

In einer noch weiteren Ausgestaltung der Erfindung ist zumindest ein Teil der Messvorrichtungen zum Erfassen der Betriebsdaten und Übertragen der erfassten Betriebsdaten zusammen mit dem Gerätecode der jeweiligen zu überwachenden Komponente an die Überwachungsvorrichtung ausgebildet. Mit anderen Worten senden diese Messvorrichtungen die Informationen über die jeweiligen zu überwachenden Komponenten direkt an die Überwachungsvorrichtung zur weiteren Verarbeitung.

In einer noch weiteren Ausgestaltung der Erfindung ist zumindest ein Teil der Messvorrichtungen zum Erfassen der Betriebsdaten und Übertragen der erfassten Betriebsdaten zusammen mit dem Gerätecode der jeweiligen zu überwachenden Komponente an eine zentrale Messvorrichtung ausgebildet, wobei diese zentrale Messvorrichtung zum Übertragen der empfangenen Betriebsdaten und Gerätecodes an die Überwachungsvorrichtung ausgebildet ist. Mit anderen Worten werden die Informationen über die jeweiligen zu überwachenden Komponenten (z.B. alle oder mehrere Solarmodule eines Strings) zunächst gebündelt und dann gemeinsam an die Überwachungsvorrichtung zur weiteren Verarbeitung gesendet. Als zentrale Messvorrichtung kann in diesem Fall zum Beispiel die dem Wechselrichter des Strings zugeordnete Messvorrichtung dienen.

Selbstverständlich können innerhalb einer zu überwachenden Photovoltaikanlage auch beide vorgenannten Ausführungsformen der direkten und der gebündelten Übertragung der Informationen an die Überwachungsvorrichtung zum Einsatz kommen.

In einer weiteren Ausführungsform der Erfindung sind die Positionen der zu überwachenden Komponenten in dem Ortsplan enthalten und ist die Eingabevorrichtung der Überwachungsvorrichtung zum Einlesen des Ortsplanes gemeinsam mit den Positionen der zu überwachenden Komponenten ausgebildet.

Beispielsweise können die zu überwachenden Komponenten mit Etiketten versehen sein, welche den jeweiligen Gerätecode zum Beispiel in Form einer Ziffernfolge oder eines Strichcodes aufweisen. Diese Etiketten werden dann bei der Konfiguration des Überwachungssystems der Photovoltaikanlage von den Komponenten abgezogen und an den jeweiligen Positionen in den Ortsplan der Photovoltaikanlage geklebt. Der Ortsplan, der nun die Positionsinformationen der zu überwachenden Komponenten enthält, kann dann von der Überwachungsvorrichtung zum Beispiel eingescannt und verarbeitet werden. Anstelle von Etiketten sind auch handschriftliche Eintragungen in den einzulesenden Ortsplan denkbar, auch wenn diese Vorgehensweise eine höhere Fehlerquote beinhaltet.

Alternativ oder zusätzlich kann die Eingabevorrichtung zum Einlesen des Ortsplanes und zum (separaten) Erfassen von Positionsinformationen der zu überwachenden Komponenten ausgebildet sein und kann die Auswerteeinrichtung der Überwachungsvorrichtung dementsprechend ausgebildet sein, um die erfassten Positionsinformationen der zu überwachenden Komponenten mit dem eingelesenen Ortsplan zusammenzuführen.

Beispielsweise können nach dem Einlesen bzw. Einscannen des Ortsplanes an den zu überwachenden Komponenten angebrachte Gerätecodes (z.B. in Form aufgeklebter oder aufgedruckter Strichcodes oder Ziffernfolgen) mittels eines mobilen Lesegerätes erfasst werden, wobei das Lesegerät zugleich Positionsinformationen erfasst (z.B. Ortskoordinaten mittels GPS oder manuelle Eingabe von Ortskoordinaten). Die Auswerteeinrichtung der Überwachungsvorrichtung konfiguriert dann anhand der Positionsinformationen die Gerätecodes an den jeweiligen Positionen im Ortsplan.

Gemäß einem zweiten Aspekt der Erfindung wird die oben genannte Aufgabe durch ein Verfahren zum Überwachen einer Photovoltaikanlage mit den Merkmalen des Anspruches 8 gelöst. Vorteilhafte Ausgestaltungen und Weiterbildungen dieses Verfahrens sind Gegenstand der abhängigen Ansprüche 9 bis 12.

Das erfindungsgemäße Verfahren zum Überwachen einer Photovoltaikanlage mit einer Anzahl zu überwachender elektrischer oder elektronischer Komponenten, die an bestimmten Positionen angeordnet sind, umfasst die Schritte:
Erfassen und Speichern eines Ortsplanes und von Positionen der zu überwachenden Komponenten in dem Ortsplan durch eine Überwachungsvorrichtung;
Erfassen von Betriebsdaten der zu überwachenden Komponenten durch diesen zugeordnete Messvorrichtungen;
Übertragen der erfassten Betriebsdaten zusammen mit einem Gerätecode der jeweiligen zu überwachenden Komponente an die Überwachungsvorrichtung; Zuordnen der empfangenen Gerätecodes zu den Positionen der diesen entsprechenden zu überwachenden Komponenten in dem erfassten Ortsplan durch die Überwachungsvorrichtung; und
Ausgeben von Betriebsdaten und/oder diesen entsprechenden Signalen in dem Ortsplan an den Positionen der jeweiligen zu überwachenden Komponenten durch die Überwachungsvorrichtung.

In einer Ausgestaltung der Erfindung weist der Ortsplan wenigstens zwei Ebenen auf, wobei in einer übergeordneten Ebene die Positionen von Gruppen von zu überwachenden Komponenten der Photovoltaikanlage dargestellt werden und in einer untergeordneten Ebene die Positionen der zu überwachenden Komponenten innerhalb einer Gruppe von zu überwachenden Komponenten dargestellt werden.

In einer weiteren Ausgestaltung der Erfindung weist der Ortsplan wenigstens zwei Ebenen auf, wobei in einer übergeordneten Ebene die Positionen von zu überwachenden Komponenten der Photovoltaikanlage dargestellt werden.

In einer noch weiteren Ausgestaltung der Erfindung sind die Positionen der zu überwachenden Komponenten in dem Ortsplan enthalten und wird der Ortsplan gemeinsam mit den Positionen der zu überwachenden Komponenten eingelesen.

In einer alternativen Ausgestaltung der Erfindung umfasst das Verfahren die Schritte des Einlesens des Ortsplanes; des (separaten) Erfassens von Positionsinformationen der zu überwachenden Komponenten; und des Zusammenführens der erfassten Positionsinformationen der zu überwachenden Komponenten mit dem eingelesenen Ortsplan.

Mit dem erfindungsgemäßen Verfahren und seinen bevorzugten Ausführungsformen lassen sich die gleichen Vorteile erzielen, die oben in Zusammenhang mit der Photovoltaikanlage der Erfindung erläutert worden sind. Außerdem gelten für das Verfahren die gleichen Begriffsdefinitionen und dergleichen wie für die Vorrichtungsansprüche.

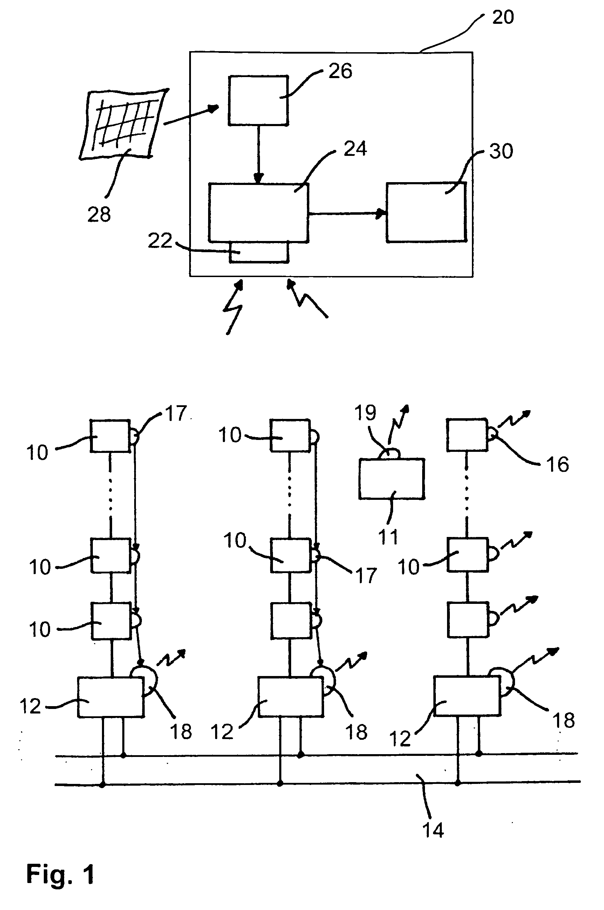

Obige sowie weitere Merkmale, Vorteile und Anwendungsmöglichkeiten der Erfindung werden aus der nachfolgenden Beschreibung eines bevorzugten, nichteinschränkenden Ausführungsbeispiels unter Bezugnahme auf die beiliegende Zeichnung besser verständlich. Darin zeigt die einzige Figur 1 ein stark vereinfachtes Blockschaltbild einer Photovoltaikanlage gemäß einem Ausführungsbeispiel der vorliegenden Erfindung.

Wie in Fig. 1 dargestellt, weist die Photovoltaikanlage mehrere Photovoltaikgeneratoren auf, welche jeweils aus mehreren, zu so genannten Strings in Reihe zusammengeschalteten Solarmodulen 10 mit jeweils wenigstens einer Solarzelle bestehen. Die von diesen Solarmodulen 10 erzeugte Gleichspannung wird jeweils einem Wechselrichter 12 zugeführt, der diese in eine geregelte Wechselspannung umwandelt, um sie in ein Stromnetz 14 einzuspeisen oder einem Verbraucher zur Verfügung zu stellen.

Die Solarmodule 10 und die Wechselrichter 12 gehören zu den zu überwachenden Komponenten der Photovoltaikanlage. Darüber hinaus ist in der Photovoltaikanlage auch eine Alarmeinrichtung 11 vorgesehen, welche zum Beispiel Teil eines Diebstahlschutzsystems ist und ebenfalls überwacht werden kann. Zu Überwachungszwecken ist jede zu überwachende Komponente 10-12 mit einer Messvorrichtung 16-19 versehen, welche die aktuellen Betriebsdaten der jeweiligen Komponente erfasst, welche Aufschluss über den aktuellen Betriebszustand bzw. die Funktionsfähigkeit der Komponente geben.

Jedes Solarmodul 10 ist mit einer Messvorrichtung 16, 17 ausgestattet, jeder Wechselrichter 12 ist mit einer Messvorrichtung 18 ausgestattet, und die Alarmeinrichtung 11 ist mit einer Messeinrichtung 19 ausgestattet. Dabei können diese Messvorrichtungen 16-19 wahlweise in die jeweiligen Komponenten 10-12 integrierte Messvorrichtungen oder separate, an die jeweiligen Komponenten 10-12 angeschlossene Messvorrichtungen sein.

In Fig. 1 ist erkennbar, dass es unterschiedliche Arten von Messvorrichtungen 16-19 in einer Photovoltaikanlage geben kann. Die Messvorrichtungen 16 (rechts in Fig. 1) und 19 sind so ausgebildet, dass sie die erfassten Betriebsdaten und die Gerätecodes der jeweiligen Solarmodule 10 bzw. Alarmeinrichtungen 11 direkt an eine Überwachungsvorrichtung 20 senden. Die Messvorrichtungen 17 der Solarmodule 10 (mittig und links in Fig. 1) sind dagegen in Reihe geschaltet und übertragen die erfassten Betriebsdaten mit den jeweiligen Gerätecodes zunächst an eine zentrale Messvorrichtung 18, welche diese Informationen dann gesammelt an die Überwachungsvorrichtung 20 sendet. Diese zentralen Messvorrichtungen 18 sind in diesem Ausführungsbeispiel zugleich die Messvorrichtungen der Wechselrichter 12.

Die Überwachungsvorrichtung 20 umfasst in diesem Ausführungsbeispiel einen Empfänger 22 zum Empfangen der von den Messvorrichtungen 17-19 gesendeten Informationen (Betriebsdaten und Gerätecodes), eine Auswerteeinrichtung 24 zum Auswerten der empfangenen Informationen, eine Eingabevorrichtung 26 zum Eingeben eines Ortsplanes 28 sowie eine Ausgabevorrichtung 30.

Es wird nun beispielhaft die Funktionsweise dieser Photovoltaikanlage bzw. ihres Überwachungssystems näher erläutert.

In einem ersten Schritt muss das Überwachungssystem konfiguriert werden. Hierbei muss insbesondere eine Anlagendokumentation erfolgen, aus welcher sich der Aufbau der Photovoltaikanlage bzw. die Positionen der zu überwachenden Komponenten 10-12 der Photovoltaikanlage ergeben.

Nach der Installation der Photovoltaikanlage mit allen Komponenten wird zunächst ein Ortsplan 28 erstellt. Dies kann in Form einer einfachen Handskizze oder einer technischen Zeichnung erfolgen. In diesen Ortsplan werden sodann Informationen über die Positionen der zu überwachenden Komponenten 10-12 eingefügt.

Zu diesem Zweck sind alle zu überwachenden Komponenten 10-12 mit Etiketten bzw. Aufklebern versehen, welche einen eindeutigen Gerätecode für die jeweilige Komponente aufweisen. Dieser Gerätecode ist zum Beispiel eine Seriennummer der Komponente, die in Form einer Ziffernfolge oder eines Strichcodes (eindimensional oder zweidimensional) vorliegt. Neben dieser Gerätekennung können die Etiketten wahlweise noch weitere Felder für z.B. eine Nummerierung besitzen. Die Etiketten können bereits bei der Auslieferung der Komponenten aufgebracht werden oder erst bei deren Installation innerhalb der Photovoltaikanlage.

Diese Etiketten werden dann von den zu überwachenden Komponenten 10-12 abgezogen und in den bereitgestellten Ortsplan 28 an den entsprechenden Stellen eingeklebt. Die Dokumentation der Photovoltaikanlage erfolgt halbautomatisch, auf einfache Weise und ohne Zusatzwerkzeuge und Rechnerunterstützung vor Ort.

Dieser Ortsplan 28, der nun auch die Positionen aller zu überwachenden Komponenten 10-12 enthält, wird sodann eingescannt und der Überwachungsvorrichtung 20 über die Eingabevorrichtung 26 zur Verfügung gestellt. Bei diesem Vorgang werden (durch den Scanner, die Eingabevorrichtung 26 oder die Auswerteeinrichtung 24) die Strichcodes bzw. Seriennummern in dem Ortsplan automatisch erkannt. An den entsprechenden Stellen können dann im Ortsplan 28 geeignete Symbole als Platzhalter für die jeweiligen Komponenten 10-12 erzeugt werden, denen die jeweiligen Seriennummern hinterlegt sind. Bei größeren Photovoltaikanlagen können die Komponenten 10-12 auch gruppiert bzw. kaskadiert und in dem Ortsplan 28 in mehreren Ebenen hinterlegt werden.

Der so erzeugte Ortsplan wird von der Auswerteeinrichtung 24 in eine HTML-Seite umgewandelt und einem Webserver zur Verfügung gestellt. Auf dem Anzeigegerät 30 des Webservers wird dann diese HTML-Seite dargestellt. Der Webserver ist dabei vorzugsweise Bestandteil eines so genannten Datenloggers, der die zu überwachenden Komponenten 10-12 zu einem Netzwerk zusammenfasst.

Tritt in der Photovoltaikanlage an irgendeiner Komponente 10-12 eine Störung auf, so wird diese durch die zugehörige Messvorrichtung 16-19 erfasst und zusammen mit dem Gerätecode der jeweiligen Komponente 10-12 an die Überwachungsvorrichtung 20 übertragen. Die Auswerteeinrichtung 24 kann die die Störung meldenden Betriebsdaten dann mit Hilfe des mitgelieferten Gerätecodes einer entsprechenden Position im Ortsplan zuordnen.

Nach dieser Zuordnung kann das jeweilige Gerätesymbol in dem ausgegebenen Ortsplan zum Beispiel farbig oder blinkend hervorgehoben werden. Bei gruppierten Komponenten 10-12 geschieht dies ggf. mehrstufig. Der Benutzer kann einerseits sofort und ohne weitere Hilfsmittel die Position der Komponente in der Photovoltaikanlage erkennen und kann ― je nach Ausgestaltung der Überwachungsvorrichtung ― andererseits durch Anklicken bzw. Anwählen des hervorgehobenen Gerätesymbols konkretere Informationen über die Betriebsstörung oder dergleichen abrufen. Zu Wartungszwecken kann die jeweilige Komponente 10-12 in der Photovoltaikanlage anhand des auf dem Anzeigegerät 30 dargestellten Planes leicht aufgefunden werden.

## Patentansprüche

1. Photovoltaikanlage, mit
einer Anzahl zu überwachender elektrischer oder elektronischer Komponenten (10, 11, 12), die an bestimmten Positionen angeordnet sind; mehreren Messvorrichtungen (16, 17, 18, 19), die jeweils einer zu überwachenden Komponente (10, 11, 12) zugeordnet sind, zum Erfassen von Betriebsdaten der jeweiligen zu überwachenden Komponente, wobei die Messvorrichtungen (16, 17, 18, 19) jeweils zum Übertragen der erfassten Betriebsdaten zusammen mit einem Gerätecode der jeweiligen zu überwachenden Komponente ausgebildet sind; und
einer Überwachungsvorrichtung (20) zum Überwachen der zu überwachenden Komponenten (10, 11, 12) der Photovoltaikanlage, wobei die Überwachungsvorrichtung (20) einen Empfänger (22) zum Empfangen der von den Messvorrichtungen (16, 17, 18, 19) übertragenen Betriebsdaten und Gerätecodes, eine Auswerteeinrichtung (24) zum Auswerten der empfangenen Betriebsdaten und eine Ausgabevorrichtung (30) zum Ausgeben von Gerätecodes oder diesen entsprechenden Angaben zusammen mit zugehörigen Betriebsdaten aufweist,
**dadurch gekennzeichnet, dass**
die Überwachungsvorrichtung (20) eine Eingabevorrichtung (26) zum Eingeben eines Ortsplanes (28) und der Positionen der zu überwachenden Komponenten (10, 11, 12) in dem Ortsplan aufweist;
die Auswerteeinrichtung (24) der Überwachungsvorrichtung (20) ausgebildet ist, um die empfangenen Gerätecodes den Positionen der diesen entsprechenden zu überwachenden Komponenten (10, 11, 12) in dem eingegebenen Ortsplan (28) zuzuordnen; und
die Ausgabevorrichtung (30) der Überwachungsvorrichtung (20) ausgebildet ist, um die ausgewerteten Betriebsdaten und/oder diesen entsprechende Signale in dem Ortsplan (28) an den Positionen der jeweiligen zu überwachenden Komponenten (10, 11, 12) darzustellen.

2. Photovoltaikanlage nach Anspruch 1,
**dadurch gekennzeichnet, dass**
der Ortsplan (28) wenigstens zwei Ebenen aufweist, wobei in einer übergeordneten Ebene die Positionen von Gruppen von zu überwachenden Komponenten (10, 12) der Photovoltaikanlage darstellbar sind und in einer untergeordneten Ebene die Positionen der zu überwachenden Komponenten (10, 12) innerhalb einer Gruppe von zu überwachenden Komponenten darstellbar sind.

3. Photovoltaikanlage nach Anspruch 1 oder 2,
**dadurch gekennzeichnet, dass**
der Ortsplan (28) wenigstens zwei Ebenen aufweist, wobei in einer übergeordneten Ebene die Positionen von zu überwachenden Komponenten (10, 12) der Photovoltaikanlage darstellbar sind.

4. Photovoltaikanlage nach einem der vorhergehenden Ansprüche,
**dadurch gekennzeichnet, dass**
zumindest ein Teil der Messvorrichtungen (17, 18, 19) zum Erfassen der Betriebsdaten und Übertragen der erfassten Betriebsdaten zusammen mit dem Gerätecode der jeweiligen zu überwachenden Komponente (10, 11, 12) an die Überwachungsvorrichtung (20) ausgebildet ist.

5. Photovoltaikanlage nach einem der vorhergehenden Ansprüche,
**dadurch gekennzeichnet, dass**
zumindest ein Teil der Messvorrichtungen (16) zum Erfassen der Betriebsdaten und Übertragen der erfassten Betriebsdaten zusammen mit dem Gerätecode der jeweiligen zu überwachenden Komponente (10) an eine zentrale Messvorrichtung (18) ausgebildet ist, wobei die zentrale Messvorrichtung (18) zum Übertragen der empfangenen Betriebsdaten und Gerätecodes an die Überwachungsvorrichtung (20) ausgebildet ist.

6. Photovoltaikanlage nach einem der vorhergehenden Ansprüche,
**dadurch gekennzeichnet, dass**
die Positionen der zu überwachenden Komponenten (10, 11, 12) in dem Ortsplan (28) enthalten sind; und
die Eingabevorrichtung (26) zum Einlesen des Ortsplanes (28) gemeinsam mit den Positionen der zu überwachenden Komponenten (10, 11, 12) ausgebildet ist.

7. Photovoltaikanlage nach einem der vorhergehenden Ansprüche,
**dadurch gekennzeichnet, dass**
die Eingabevorrichtung (26) zum Einlesen des Ortsplanes (28) und zum Erfassen von Positionsinformationen der zu überwachenden Komponenten (10, 11, 12) ausgebildet ist; und
die Auswerteeinrichtung (24) der Überwachungsvorrichtung (20) ausgebildet ist, um die erfassten Positionsinformationen der zu überwachenden Komponenten (10, 11, 12) mit dem eingelesenen Ortsplan (28) zusammenzuführen.

8. Verfahren zum Überwachen einer Photovoltaikanlage mit einer Anzahl zu überwachender elektrischer oder elektronischer Komponenten (10, 11, 12), die an bestimmten Positionen angeordnet sind, mit den Schritten:
Erfassen und Speichern eines Ortsplanes (28) und von Positionen der zu überwachenden Komponenten (10, 11, 12) in dem Ortsplan durch eine Überwachungsvorrichtung (20);
Erfassen von Betriebsdaten der zu überwachenden Komponenten (10, 11, 12) durch diesen zugeordnete Messvorrichtungen (16, 17, 18, 19);
Übertragen der erfassten Betriebsdaten zusammen mit einem Gerätecode der jeweiligen zu überwachenden Komponente (10, 11, 12) an die Überwachungsvorrichtung (20);
Zuordnen der empfangenen Gerätecodes zu den Positionen der diesen entsprechenden zu überwachenden Komponenten (10, 11, 12) in dem erfassten Ortsplan (28) durch die Überwachungsvorrichtung (20); und
Ausgeben von Betriebsdaten und/oder diesen entsprechenden Signalen in dem Ortsplan (28) an den Positionen der jeweiligen zu überwachenden Komponenten (10, 11, 12) durch die Überwachungsvorrichtung.

9. Verfahren nach Anspruch 8,
**dadurch gekennzeichnet, dass**
der Ortsplan (28) wenigstens zwei Ebenen aufweist, wobei in einer übergeordneten Ebene die Positionen von Gruppen von zu überwachenden Komponenten (10, 12) der Photovoltaikanlage dargestellt werden und in einer untergeordneten Ebene die Positionen der zu überwachenden Komponenten (10, 12) innerhalb einer Gruppe von zu überwachenden Komponenten dargestellt werden.

10. Verfahren nach Anspruch 8 oder 9,
**dadurch gekennzeichnet, dass**
der Ortsplan (28) wenigstens zwei Ebenen aufweist, wobei in einer übergeordneten Ebene die Positionen von zu überwachenden Komponenten (10, 12) der Photovoltaikanlage dargestellt werden.

11. Verfahren nach einem der Ansprüche 8 bis 10,
**dadurch gekennzeichnet, dass**
die Positionen der zu überwachenden Komponenten (10, 11, 12) in dem Ortsplan (28) enthalten sind; und
der Ortsplan (28) gemeinsam mit den Positionen der zu überwachenden Komponenten (10, 11, 12) eingelesen wird.

12. Verfahren nach einem der Ansprüche 8 bis 10,
**gekennzeichnet durch** die Schritte:
Einlesen des Ortsplanes (28);
Erfassen von Positionsinformationen der zu überwachenden Komponenten (10, 11, 12); und
Zusammenführen der erfassten Positionsinformationen der zu überwachenden Komponenten (10, 11, 12) mit dem eingelesenen Ortsplan (28).
